# EUROPÄISCHE PATENTANMELDUNG

(11) **EP 1 282 054 A1**
(43) Veröffentlichungstag der Anmeldung: **05.02.2003**
(21) Anmeldenummer: 01440247.3
(22) Anmeldetag: 01.08.2001
(51) Int. Cl.: G06F 17/60

(54) **Verfahren zum Durchführen eines Dienstes zur Organisation von Besprechungen für Teilnehmer eines Kommunikationsnetzes, sowie Diensterechner und Programmmodul hierfür**

(71) Anmelder: ALCATEL, 75008 Paris (FR)
(72) Erfinder: Eisinger, Bernd, 3744 Stockern (AT)
(74) Vertreter: Brose, Gerhard

(57) **Zusammenfassung**

Die Erfindung betrifft ein Verfahren zum Durchführen eines Dienstes zur Organisation von Besprechungen für Teilnehmer (SA, SB) eines Kommunikationsnetzes (CN) mit den Schritten Speichern einer von einem Endgerät eines einladenden Teilnehmers (SB) übermittelten Einladung zu einer Besprechung mit einer Angabe über Ort Zeit und einer Teilnehmerkennung, insbesondere einer Rufnummer oder einer Netzadresse, eines oder jeweils mehrerer eingeladener Teilnehmer (SA), Empfangen einer Ortsinformation über einen eingeladenen Teilnehmers (SA), Ermitteln einer Reiseroute vom Ort des eingeladenen Teilnehmers (SA) zum Besprechungsort und Schätzten der dazu benötigten Reisezeit für diesen Teilnehmer (SA), Ermitteln eines Zeitpunkts unter Berücksichtigung der geschätzten Reisezeit, zu welcher der eingeladene Teilnehmer (SA) seine Reise beginnen muß und Senden einer Information, insbesondere eine Information, welche Reiseinformation und einen empfohlenen Zeitpunkt für den Reisebeginn enthält, an ein Endgerät des eingeladenen Teilnehmers (SA) zumindest einmal zu diesem Zeitpunkt, sowie einen Diensterechner (MS) und Programmmodul hierfür.

## Beschreibung

Die Erfindung betrifft ein Verfahren zum Durchführen eines Dienstes zur Organisation von Besprechungen für Teilnehmer eines Kommunikationsnetzes nach dem Oberbegriff des Anspruchs 1, sowie einen Diensterechner und ein Programmmodul zum Ablauf in einem Diensterechner hierfür.

Häufig werden Besprechungen mit einiger Vorlaufzeit geplant. Eine einladende Person, die eine Besprechung plant, wird die gewünschten Besprechungsteilnehmer hinreichend früh informieren und einladen. Zur Kommunikation mit diesen Teilnehmern benutzt er in der Regel gängige Kommunikationseinrichtungen, beispielsweise Telefon, Faxgerät oder, falls er und die Teilnehmer an das Internet oder ein Intranet angeschlossen sind, die elektronische Post (e-mail). Ein Nachteil dieses Verfahrens ist seine mangelnde Flexibilität. So muss zur Vorbereitung zu einer geplanten Besprechung häufig eine aufwendige Terminabsprache zwischen den Teilnehmern erfolgen. Besonders unangenehm ist dann, wenn eine geplante Besprechung kurzfristig verschoben werden muss.

Im Internet sind sogenannte Online-Kalender verfügbar, die es erlauben, dass die Teilnehmer einer meist geschlossenen Benutzergruppe mittels eines (elektronischen) Terminkalenders, welchen diese Teilnehmer gemeinsam einsehen können und in den sie gegebenenfalls auch Termine eintragen können, Termine gegenseitig absprechen. Die Teilnehmer haben alle Zugriff zu einer entsprechenden Internetseite, welche auf einem sogenannten (Internet-) Server gespeichert ist und jeweils mittels eines Internet-Endgeräts, in der Regel mittels eines sogenannten Personal Computers mit einem sogenannten Browser, in das jeweilige Internet-Endgerät geladen werden kann. Eintragungen oder Änderungen können dann am Endgerät durchgeführt und an den Server zurückgesandt werden.

Wenn der Server diese Eintragungen annimmt, können diese unmittelbar für die übrigen Teilnehmer verfügbar, d.h. abrufbar gemacht werden. Dadurch ist eine flexible Terminabsprache und Terminplanung unter den Teilnehmern möglich.

Ein Nachteil der genannten Verfahrens liegt darin, dass die einladende Person, im folgenden verallgemeinernd einladender Teilnehmer genannt, stets damit rechnen muss, dass einzelne Teilnehmer, insbesondere bei langer Vorlaufzeit, die geplante Besprechung vergessen, unerwartete Termine wahrnehmen müssen, sich einzelnen Teilnehmern unerwartete Hindernisse entgegen stellen, beispielsweise Verspätungen gewählter Verkehrsmittel, oder Verspätungen durch falsch geplante Reisezeiten entstehen.

Der Erfindung liegt die Aufgabe zugrunde, ein Verfahren und die zu seiner Ausführung erforderlichen Mittel zum Durchführen eines Dienstes zur Organisation von Besprechungen für Teilnehmer zu schaffen, welches es dem einladenden Teilnehmer ermöglichen, Besprechungen komfortabel zu organisieren, und die eingeladenen Teilnehmer bei der Planung und Durchführung der jeweils notwendigen Reise zu unterstützen.

Erfindungsgemäß wird diese Aufgabe durch ein Verfahren nach der Lehre des Anspruchs 1, einen Diensterechner nach der Lehre des Anspruchs 7 und ein Programmmodul nach der Lehre des Anspruchs 8 gelöst.

Grundgedanke der Erfindung ist es, dass ein einladender Teilnehmer zunächst eine Einladung zu einer Besprechung mit einer Angabe über Ort Zeit und einer Teilnehmerkennung, insbesondere einer Rufnummer oder eine Netzadresse, eines oder jeweils mehrerer eingeladener Teilnehmer an einen Diensterechner des Kommunikationsnetzes übermittelt. Für die eingeladenen Teilnehmer wird jeweils eine Reiseroute zur Erreichung des Besprechungsorts ermittelt. Weiter wird jeweils die voraussichtlich benötigte Reisezeit geschätzt. Aufgrund dieser Reisezeiten wird dann jeweils ein Zeitpunkt ermittelt, beispielsweise jeweils eine bestimmte Zeit vor empfohlenen Reiseantritt. Jeder Teilnehmer erhält zumindest einmal jeweils zum für diesen Teilnehmer ermittelten Zeitpunkt eine Information, welche insbesondere die entsprechende Reiseinformation und einen empfohlenen Zeitpunkt für den Reisebeginn enthält.

Weitere vorteilhafte Ausgestaltungen der Erfindung sind den abhängigen Ansprüchen und der Beschreibung zu entnehmen.

Im folgenden wird die Erfindung unter Zuhilfenahme der Zeichnung weiter erläutert:

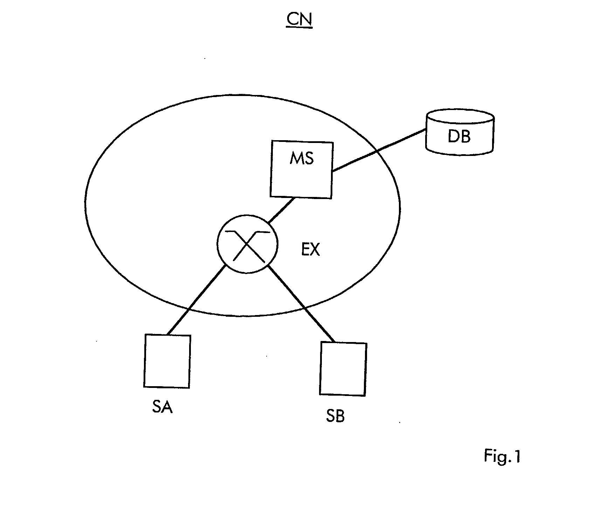

- Fig.1: zeigt schematisch ein Kommunikationsnetz zur Ausführung des erfindungsgemäßen Verfahrens.

Fig.1 zeigt ein Kommunikationsnetz CN beispielhaft mit einer Vermittlungsstelle EX und einem Diensterechner MS. Mit der Vermittlungsstelle EX sind beispielhaft ein Teilnehmerendgerät eines eingeladenen Teilnehmers SA und ein Teilnehmerendgerät eines einladenden Teilnehmers SB verbunden. Der Diensterechner MS ist jeweils mit der Vermittlungsstelle EX und einer (externen) Datenbank DB verbunden.

Zur Sprachvereinfachung wird im folgenden sowohl eine teilnehmende Person als auch das von dieser Person benutzte Teilnehmerendgerät einfach als Teilnehmer bezeichnet.

Das Kommunikationsnetz CN stellt vorzugsweise ein Mobilfunknetz dar, beispielsweise ein Mobilfunknetz nach dem weit verbreiteten GSM-Standard (engl.: Global System for Mobile Communication). Vereinfachend soll hier davon ausgegangen werden, dass beide Teilnehmer SA und SB mit der gleichen Vermittlungsstelle EX verbunden sind. Das Netz CN kann auch als hybrides Netz aus verschiedenartigen oder physikalisch verschieden realisierten Netzwerken realisiert werden, bei welchem die Teilnehmer SA und SB verschiedenartige Endgeräte, beispielsweise ein Mobilfunk-Endgerät und ein Internet-Endgerät darstellen.

Der Diensterechner MS wird zunächst als ein einer Vermittlungsstelle EX zugeordneter kompakter Rechner angesehen. Der Diensterechner MS weist hier Funktionen zur Dienstesteuerung, zur Verwaltung und zur Speicherung relevanter Daten des erfindungsgemäßen Verfahren und zur Teilnehmerkommunikation auf. Der Diensterechner MS kann alternativ auch als Rechnerverbund oder aus mehreren miteinander kommunizierenden Rechnern bestehen. Insbesondere können, später genauer erläutert, die verschiedenen beschriebenen Aufgaben, beispielsweise die Dienstesteuerung, die Datenverwaltung und die Teilnehmerkommunikation auch physikalisch verschiedenen Rechnern, beispielsweise die Dienstesteuerung und die Datenverwaltung einem zentralen Rechner und die Teilnehmerkommunikation dezentralen, jeweils einer Vermittlungsstelle EX des Kommunikationsnetzes CN zugeordneten Rechnern zugewiesen werden.

Im Folgenden soll ein einfacher funktionaler Kommunikationsablauf zur Organisation einer Besprechung durch einen einladenden Teilnehmer SB und zur Unterstützung der Planung eines eingeladenen Teilnehmers SA im Rahmen des erfindungsgemäßen Verfahrens beschrieben werden. Der Ablauf lässt sich dabei in zwei Teilen darstellen:
a) Organisation einer Besprechung:
   - Ein einladender Teilnehmer SB fordert eine Verbindung zu einem Diensterechner MS, mittels Eingabe einer bestimmten Dienste-Rufnummer an und übermittelt eine Einladung zu einer Besprechung mit einer Angabe über Ort Zeit der Besprechung und der Rufnummern von eingeladenen Teilnehmern,
   - der Diensterechner MS fordert mittels Übergabe der Rufnummern an die Vermittlungsstelle EX eine Verbindung zu den eingeladenen Teilnehmer an und übermittelt die Einladung jeweils an diese Teilnehmer,
   - die eingeladenen Teilnehmer senden, bei Akzeptanz der Einladung, jeweils eine Bestätigung, den Aufenthaltsort vor Reisebeginn (d.h. in der Regel der Wohnort oder der Arbeitsort) das oder die geplanten Verkehrsmittel (z.B. Auto, Flugzeug+Taxi, Flugzeug (Air France)+Stadtbahn, etc) und gegebenenfalls weitere Angaben (z.B. dass ein Aufenthalt bestimmter Zeitdauer an einem bestimmten Ort vorgesehen werden soll), an den Diensterechner MS,
   - der Diensterechner MS fordert eine Verbindung zum einladenden Teilnehmer SB an und übermittelt eine Information über die eingegangenen Bestätigungen und
   - der einladende Teilnehmer SB übermittelt eine Bestätigung, dass die geplante Besprechung stattfindet.
b) Unterstützung der Planung der eingeladenen Teilnehmers am Beispiel eines Teilnehmers SA:
   - der Diensterechner MS stellt eine Verbindung zu einer externen Datenbank DB, welche entsprechend des gewählten Verkehrsmittels ausgewählt wird und übermittelt den Ort des eingeladenen Teilnehmers SA, den Besprechungsort den Besprechungsbeginn und gegebenenfalls weitere Angaben an diese Datenbank,
   - die Datenbank DB ermittelt ein oder mehrere mögliche Reiserouten oder Reisemöglichkeiten mit einem jeweils dazugehörigen Zeitplan und übermittelt diese Information an den Diensterechner MS,
   - der Diensterechner MS wählt eine Reisemöglichkeit aus, beispielsweise die Reisemöglichkeit mit der kürzesten Zeitdauer,
   - der Diensterechner MS ermittelt aufgrund der ermittelten Zeitdauer der ausgewählten Reiseverbindung einen Zeitpunkts zu welchen der eingeladene Teilnehmer SA seine Reise beginnen muß, wobei bei der Ermittlung dieses Zeitpunkts ein Sicherheitsaufschlag, beispielsweise 10 Minuten, berücksichtigt werden kann und
   - zumindest einmal zum ermittelten Zeitpunkt sendet der Diensterechner MS eine Information an den eingeladenen Teilnehmers SA, welche Reiseinformation, beispielsweise die ermittelte Reiseroute, Fahrplan- oder Verkehrsinformation und einen empfohlenen Zeitpunkt für den Reisebeginn enthält.

In einer alternativen Ausführung ist im Diensterechner eine Tabelle mit Zuordnungen von (Teilnehmer-) Namen (oder eindeutige Teilnehmerkennungen, beispielsweise eindeutige Nummern) zu den entsprechenden Rufnummern gespeichert. Dem Diensterechner WS können dann bei einer Einladung statt der Rufnummern der eingeladenen Teilnehmer auch ihre Namen übermittelt werden. Der Diensterechner ermittelt dann mittels der genannten Tabelle die Rufnummern dieser Teilnehmer.

Es ist auch möglich, dass für jeden oder bestimmte Teilnehmer ein Profil gespeichert ist, in welchem beispielsweise sein Wohnort, Arbeitsort und bevorzugte Reisemittel und weitere Reisegewohnheiten gespeichert sind. Weiter kann für diese Teilnehmer gespeichert sein, zu welchen Zeitpunkten und in welcher Form sie vom Diensterechner MS die genannte Reiseinformation erhalten wollen. Damit kann der Kommunikationsaufwand zwischen den Teilnehmern und dem Diensterechner MS auf ein Minimum beschränkt werden.

Es ist weiter möglich, dass der Diensterechner MS automatisch eine Reisebuchung für einen eingeladenen Teilnehmer SA vornimmt und ihn entsprechend informiert.

Teilnehmer eines zellularen Mobilfunknetzes, beispielsweise des GSM-Netzes, werden kontinuierlich geortet. Sobald ein Teilnehmer einen sogenannten geografischen Bereich des Netzes verlässt und in einen neuen geografischen Bereich eintritt, wird dieser Teilnehmer und der neue geografische Bereich in einer sogenannten Besucherdatei (engl.: Visitors Location Register, VLR) vermerkt. Darüber hinaus sind Verfahren bekannt, bei denen eine wesentlich genauere Ortung über die Ortung eines geographischen Bereiches hinaus ermöglicht wird, z.B. mit Hilfe von Feldstärkemessungen der vom mobilen Endgerät empfangenen Funksignale. Alternativ kann eine genaue Teilnehmerortung auch mittels des bekannten sogenannten Global Positioning Systems (GPS) durchgeführt werden. Die Verwaltung der Ortungsdaten und gegebenenfalls die Steuerung der Ortungsfunktionen wird dabei vorzugsweise von einem Ortungs-Diensterechner (engl.: location server) im Mobilfunknetz CN durchgeführt.

Die automatische Teilnehmerortung wird hier in einer vorteilhaften Erweiterung der Erfindung dazu genutzt, die Reiseroute oder Reisemöglichkeit an den aktuellen Aufenthaltsort des eingeladenen Teilnehmers, d.h. den Ort seines Mobilfunk-Endgeräts, anzupassen. Dazu fordert der Diensterechner MS zyklisch, beispielsweise in Abständen von 5 Minuten, aktuelle Ortsinformation eines eingeladenen Teilnehmers SA vom genannten Ortungs-Diensterechner an und ermittelt, bei signifikanter Änderung des Aufenthaltsorts, mit Hilfe der genannten Datenbank DB eine neue Reiseroute.

Besonders vorteilhaft kann diese automatische Teilnehmerortung dazu durchgeführt werden, dem eingeladenen Teilnehmer SA vom Reisebeginn an aktuelle Navigationsinformation zukommen zu lassen. Des weiteren kann dieser Teilnehmer SA kontinuierlich oder auf Anfrage darüber informiert werden, ober er voraussichtlich rechtzeitig ankommt oder falls er verspätet ist, beispielsweise durch einen verspätetes Verkehrsmittel, kann ihm eine ermittelte voraussichtliche Verspätungszeit mitgeteilt werden. Diese Information kann auch dem einladenden Teilnehmer SB mitgeteilt werden, welcher somit frühestmöglich in Erfahrung bringen kann, welche eingeladenen Teilnehmer SA voraussichtlich verspätet ankommen werden und um welche Verspätungszeiten es sich dabei handelt.

Es ist weiter möglich, grundsätzlich allen Teilnehmern SA und SB einer Besprechung zu erlauben, Kontakt zum Diensterechner MS aufnehmen, um sich über den Stand (z.B. über Teilnehmer, entsprechende Rufnummern oder Status über Verspätungen) der Begegnung zu informieren.

In einer weiteren Ausführung können Teilnehmer, für welche eine Teilnahmebestätigung für eine Besprechung im Diensterechner MS gespeichert ist, aus der Liste der Teilnehmer wieder gelöscht werden. Dieses Löschen kann explizit infolge einer Anforderung des betroffenen Teilnehmers SA oder des einladenden Teilnehmer SB an dem Diensterechner erfolgen. Das Löschen kann auch nach der Feststellung erfolgen, dass der eingeladene Teilnehmer den Besprechungsort so spät erreichen wird, beispielsweise mit einer Verspätungszeit von mehr als einer Stunde, dass eine Berücksichtigung dieses Teilnehmers SA nicht mehr sinnvoll ist. Der Diensterechner MS informiert den einladenden Teilnehmer oder eingeladenen Teilnehmer SB über das Löschen.

Bisher wurde implizit davon ausgegangen, dass die Kommunikation zwischen den Teilnehmern SA und SB und dem Diensterechner MS mittels Sprache erfolgt. Dazu findet im Diensterechner MS beim Empfang von Information mittels Spracherkennung eine Umwandlung von Sprache in digitale Information (engl.: speech-to-text conversion) statt und zur Informationsausgabe eine Umwandlung von digitaler Information in Sprache (engl.: text-to-speech conversion) statt. Alternativ dazu kann der Informationsaustausch auch durch sogenannte Kurznachrichten eines Kurznachrichtensystems (engl.: short message system SMS) erfolgen.

Bei dem Diensterechner MS kann es sich um einen sogenannten Internetserver oder WWW- (World Wide Web) Server handeln, welcher es einem Einladenden Teilnehmer SB mittels eines Internet-Endgeräts erlaubt, eine Besprechung mittels eines eingangs beschriebenen Online-Kalenders zu organisieren. Aufgrund der Möglichkeit einer bequemen Informationseingabe mittels sogenannter Formulare, d.h. Internetseiten oder Webseiten, welche Felder zur Eingabe von Information aufweisen, und einer visuellen Darstellung umfangreicher Information kann eine Besprechung damit sehr bequem und für alle Teilnehmer transparent geplant werden. Mit Einführung des mobilen Internets im Rahmen des sogenannten Universal Mobile Telephone Systems (UMTS) kann dann dem reisenden eingeladenen Teilnehmer SA, soweit er ein entsprechendes Endgerät aufweist, umfangreiche Reiseinformation und Navigationsinformation graphisch dargestellt werden.

Der eingeladene Teilnehmer SA kann auch Mobilfunk-Endgerät mit einen sogenannten WAP-Browser darstellen, welches mittels sogenannter WAP-Seiten mit einem entsprechenden als sogenannter WAP-Server ausgebildeten Diensterechner MS kommuniziert. Die Kommunikation mittels WAP-Seiten ist aus Anwendersicht weitgehend identisch mit der vorhin beschriebenen Kommunikation im Internet mittels Webseiten; jedoch bieten WAP-Seiten keine Möglichkeit einer graphischen Darstellung von Information.

Es ist möglich, dass der Diensterechner MS aus einem zentralen Rechner zur Diensteverwaltung und -steuerung und mehreren dezentralen Kommunikationsrechnern besteht, welche dezentral, beispielsweise den Vermittlungsstellen EX zugeordnet, im Kommunikationsnetz angeordnet werden. Um mit verschiedenen Arten von Endgeräten der Teilnehmer kommunizieren zu können , können auch verschiedene entsprechend ausgeprägte Kommunikationsrechner vorgesehen werden. So kann ein Kommunikationsrechner als. WAP-Server ausgebildet werden, welcher mit den Teilnehmern SA und SB eigenständig mittels WAP-Seiten kommuniziert. Zwischen dem WAP-Server und dem Diensterechner MS werden dann im wesentlichen nur Nutzdaten, d.h. für den Dienst relevante Daten. Information, die nur der Menuführung der Teilnehmer dienen, können lokal vom WAP-Server generiert werden. Entsprechend kann ein Schnittstellenrechner als Internetserver ausgebildet werden. Der Diensterechner MS ist dann im wesentlichen nur für die Steuerung des Dienstes und die Speicherung relevanter Daten zuständig.

Bei einer Realisierung des beschriebenen Dienstes im sogenannten Intelligenten Netz des Mobilfunknetzes oder eines herkömmlichen Fernsprechnetzes wird die Vermittlungsstelle EX als sogenannter Service Switching Point SSP ausgebildet, an welchen ein lokaler Kommunikationsrechner zur Sprachkommunikation angeschlossen ist. Ein zentraler Dienste-Steuerrechner ist als sogenannter zentraler Service Control Point SCP ausgebildet. Der einladende Teilnehmer SB wählt dann beispielsweise eine bestimmte Dienste-Rufnummer, welche im Service Switching Point identifiziert wird. Der Service Switching Point informiert den Service Control Point, welcher den zuständigen Kommunikationsrechner anweist, mit dem Teilnehmer SB mittels Sprachkommunikation zu kommunizieren und relevante Daten zur geplanten Besprechung zu ermitteln. Diese Daten werden dann beispielsweise im Dienste-Steuerrechner oder in einem separaten Dienste-Verwaltungsrechner gespeichert. Die Berechnung der oben genannten Reiseinformationen findet im Dienste-Verwaltungsrechner statt, welche dazu mit der externen Datenbank DB kommuniziert. Aufgrund der ermittelten Daten steuert der Dienste-Steuerrechner die notwendigen Aktionen, beispielsweise die Information der Teilnehmer zu jeweils ermittelten oder festgelegten Zeitpunkten mittels Anweisungen an die entsprechenden Service Switching Points und die entsprechenden Kommunikationsrechner.

## Patentansprüche

1. Verfahren zum Durchführen eines Dienstes zur Organisation von Besprechungen für Teilnehmer (SA, SB) eines Kommunikationsnetzes (CN), **dadurch gekennzeichnet, dass** folgende Schritte durchgeführt werden:
• Speichern einer von einem Endgerät eines einladenden Teilnehmers (SB) übermittelten Einladung zu einer Besprechung mit einer Angabe über Ort, Zeit und einer Teilnehmerkennung, insbesondere einer Rufnummer oder einer Netzadresse, eines oder jeweils mehrerer eingeladener Teilnehmer (SA),
• Empfangen einer Information über den (Aufenthalts-) Ort eines eingeladenen Teilnehmers (SA),
• Ermitteln einer Reiseroute vom Ort des eingeladenen Teilnehmers (SA) zum Besprechungsort und Schätzen der dazu benötigten Reisezeit für diesen Teilnehmer (SA),
• Ermitteln eines Zeitpunkts unter Berücksichtigung der geschätzten Reisezeit, zu welcher der eingeladene Teilnehmer (SA) seine Reise beginnen muß und
• Senden einer Information an ein Endgerät des eingeladenen Teilnehmers (SA) zumindest einmal zu diesem Zeitpunkt, insbesondere eine Information, welche Reiseinformation und einen empfohlenen Zeitpunkt für den Reisebeginn enthält.

2. Verfahren nach Anspruch 1, **dadurch gekennzeichnet, dass** zum Ermitteln der Reiseroute ausgewählte Transportmittel berücksichtigt werden und zum Schätzen der Reisezeit aktuelle Fahrpläne und/oder Verkehrssituationen, welche für diese Transportmittel relevant sind, herangezogen werden.

3. Verfahren nach Anspruch 1, **dadurch gekennzeichnet, dass** eine automatische Ortung des Endgeräts des eingeladenen Teilnehmers (SA) erfolgt, und die Schätzung der Reisezeit kontinuierlich oder wiederholt aufgrund des dadurch ermittelten aktuellen Orts erfolgt.

4. Verfahren nach Anspruch 3, **dadurch gekennzeichnet, dass** von dem Zeitpunkt des vorgeschlagenen Reisebeginns an, abhängig vom ermittelten Ort, aktuelle Navigationsinformation oder Reiseinformation kontinuierlich oder wiederholt ermittelt wird und an das Endgerät dieses Teilnehmers (SA) gesendet wird.

5. Verfahren nach Anspruch 3, **dadurch gekennzeichnet, dass** von dem Zeitpunkt des vorgeschlagenen Reisebeginns an kontinuierlich oder wiederholt ermittelt wird, ob der ermittelte Aufenthaltsort es erwarten lässt, dass der eingeladene Teilnehmer den Besprechungsort rechtzeitig erreicht, und diese Information an das Endgerät des eingeladenen Teilnehmers (SA) oder das Endgerät des einladenden Teilnehmers (SB) übermittelt wird.

6. Verfahren nach Anspruch 5, **dadurch gekennzeichnet, dass** gegebenenfalls eine voraussichtliche Verspätungszeit ermittelt wird und diese Verspätungszeit an des Endgerät des eingeladenen Teilnehmers (SA) oder an das Endgerät des einladenden Teilnehmers (SB) übermittelt wird.

7. Diensterechner (WS) zur Organisation von Besprechungen für Teilnehmer (SA, SB) eines Kommunikationsnetzes (CN), mit Mitteln zur Durchführung der folgenden Schritte:
• Speichern einer von einem Endgerät eines einladenden Teilnehmers (SB) übermittelten Einladung zu einer Besprechung mit einer Angabe über Ort, Zeit und einer Teilnehmerkennung, insbesondere einer Rufnummer oder einer Netzadresse, eines oder jeweils mehrerer eingeladener Teilnehmer (SA),
• Empfangen einer Information über den (Aufenthalts-) Ort eines eingeladenen Teilnehmers (SA),
• Ermitteln einer Reiseroute vom Ort des eingeladenen Teilnehmers (SA) zum Besprechungsort und Schätzen der dazu benötigten Reisezeit für diesen Teilnehmer (SA),
• Ermitteln eines Zeitpunkts unter Berücksichtigung der geschätzten Reisezeit, zu welcher der eingeladene Teilnehmer (SA) seine Reise beginnen muß und
• Senden einer Information an ein Endgerät des eingeladenen Teilnehmers (SA) zumindest einmal zu diesem Zeitpunkt, insbesondere eine Information, welche Reiseinformation und einen empfohlenen Zeitpunkt für den Reisebeginn enthält.

8. Programmmodul zum Ablauf in einem Diensterechner (WS) zur Organisation von Besprechungen für Teilnehmer (SA, SB) eines Kommunikationsnetzes (CN) mit Mitteln zum Steuern der folgenden Schritte:
• Speichern einer von einem Endgerät eines einladenden Teilnehmers (SB) übermittelten Einladung zu einer Besprechung mit einer Angabe über Ort, Zeit und einer Teilnehmerkennung, insbesondere einer Rufnummer oder einer Netzadresse, eines oder jeweils mehrerer eingeladener Teilnehmer (SA),
• Empfangen einer Information über den (Aufenthalts-) Ort eines eingeladenen Teilnehmers (SA),
• Ermitteln einer Reiseroute vom Ort des eingeladenen Teilnehmers (SA) zum Besprechungsort und Schätzen der dazu benötigten Reisezeit für diesen Teilnehmer (SA),
• Ermitteln eines Zeitpunkts unter Berücksichtigung der geschätzten Reisezeit, zu welcher der eingeladene Teilnehmer (SA) seine Reise beginnen muß und
• Senden einer Information an ein Endgerät des eingeladenen Teilnehmers (SA) zumindest einmal zu diesem Zeitpunkt, insbesondere eine Information, welche Reiseinformation und einen empfohlenen Zeitpunkt für den Reisebeginn enthält.
